# FASCICULE DE BREVET EUROPEEN

(11) **EP 1 389 863 B1**
(45) Date de publication et mention de la délivrance du brevet: **21.12.2005**
(21) Numéro de dépôt: 03292020.9
(22) Date de dépôt: 12.08.2003
(51) Int. Cl.: H04L 29/06, H04L 12/64

(54) **Procédé pour optimiser des communications établies dans un réseau privé de télécommunication comportant deux sous-réseaux utilisant respectivement les protocoles QSIG et SIP**
Verfahren zur Optimierung einer bestehenden Übertragung in einem Privatnetzwerk über zwei Sub-Netzwerke mit QSIG und SIP Protokoll
Method for optimizing an established communication in a private network spanning two sub-networks using respectively the QSIG - and SIP protocol

(30) Priorité: 14.08.2002 FR 0210324
(43) Date de publication de la demande: 18.02.2004
(73) Titulaire: ALCATEL, 75008 Paris (FR)
(72) Inventeur: Rousseau, Olivier, 92000 Nanterre (FR)
(74) Mandataire: Sciaux, Edmond

(56) Documents cités:
- EP-A- 0 876 041
- WO-A-02/23768
- J. ELWELL: "Interworking between SIP and QSIG" IETF DRAFT, [en ligne] 7 août 2002 (2002-08-07), pages 1-45, XP002240568 Extrait de l'Internet: <URL:http://www.ietf.org/internet-drafts/> [extrait le 2003-05-09]

## Description

L'invention concerne un procédé pour optimiser des communications établies dans un réseau privé de télécommunication comportant deux sous-réseaux utilisant respectivement les protocoles QSIG et SIP. On connaît :
- Des réseaux privés classiques comportant des commutateurs commutant des circuits ou des paquets d'informations transportés de manière synchrone. Un protocole de signalisation normalisé, appelé QSIG, permet à ces commutateurs d'échanger des messages de signalisation, même s'ils proviennent de fabricants différents.
- Des réseaux privés plus récents comportant des routeurs qui acheminent des paquets d'informations (voix ou données) en utilisant le protocole Internet (IP). Un protocole de signalisation normalisé, appelé SIP (Session Initialisation Protocol), permet à ces routeurs d'échanger des messages de signalisation.
- Des réseaux privés comportant deux sous-réseaux, l'un commutant des circuits ou des paquets d'informations transportés de manière synchrone, et l'autre acheminant des paquets d'informations (voix ou données) en utilisant le protocole Internet. Ces deux sous-réseaux utilisent respectivement les protocoles QSIG et SIP, et sont reliés par une passerelle qui assure les changements de format pour les informations de voix et de signalisation échangées entre les deux sous-réseaux.

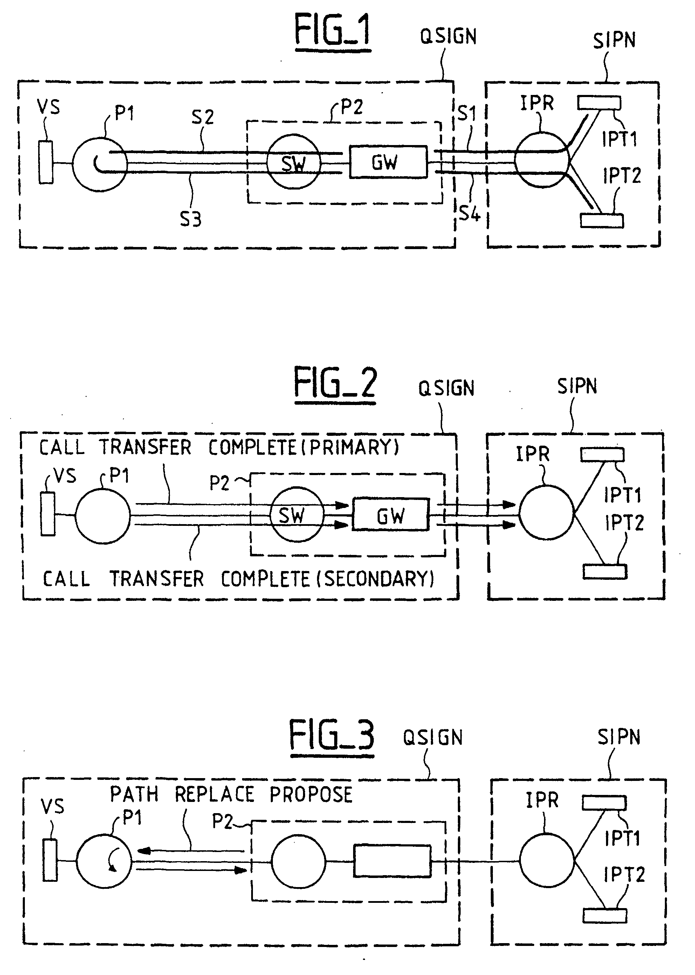

La **figure 1** représente un exemple de tel réseau privé. Il comprend :
- un sous-réseau QSIGN comportant :
   -- deux commutateurs P1 et P2, raccordés entre eux, commutant des paquets d'informations (signaux de voix) transportés de manière synchrone, et utilisant le protocole QSIG pour échanger des messages de signalisation (des terminaux téléphoniques classiques, non représentés, sont raccordés à ces noeuds) ;
   -- un serveur vocal interactif VS relié au commutateur P1, permettant d'accueillir des usagers appelant, et leur proposant notamment de transférer leur appel vers un terminal du réseau privé ;
- et un sous-réseau SIPN comportant :
   -- un routeur IPR, de type IP, relié à la passerelle GW, et acheminant des paquets d'informations (voix ou données) en utilisant le protocole Internet, cette passerelle assurant des changements de format pour les informations échangées entre les deux sous-réseaux QSIGN et SIPN, et vice-versa ;
   -- et des terminaux de type Internet, IPT1 et IPT2, qui sont par exemple des postes téléphoniques, raccordés à ce routeur IPR.

Le commutateur P2 comporte des moyens référencés SW réalisant les fonctions classiques de commutation, et des moyens référencés GW constituant une passerelle QSIG/SIP.

Supposons qu'un usager du terminal IPT1 appelle le terminal IPT2 qui appartient lui aussi au sous-réseau SIPN. Le routeur IPR établit une session qui correspond à un chemin de voix et de signalisation, reliant directement le terminal IPT1 au terminal IPT2. Il n'y a pas de problème particulier, le chemin utilisé est le plus court possible.

Supposons maintenant qu'un usager du terminal IPT1 appelle le serveur vocal VS pour contacter un service administratif, par exemple, dont il ne connaît pas le numéro. Le routeur IPR émet une commande du protocole SIP pour établir une session correspondant à un chemin de voix et de signalisation, S1-S2, depuis le terminal IPT1 jusqu'au commutateur P1 auquel est associé le serveur vocal VS. Mais le protocole SIP est opérationnel seulement jusqu'à la passerelle GW intégrée au commutateur P2. La passerelle GW traduit la commande du protocole SIP au protocole QSIG. Cette commande SIP établit une première partie S1 du chemin de voix et de signalisation, cette partie S1 s'étendant depuis le terminal IPT1 jusqu'à la passerelle GW. La commande traduite dans le protocole QSIG établit une autre partie, S2, du chemin de voix et de signalisation, cette partie S2 s'étendant depuis la passerelle GW jusqu'au serveur vocal VS. Ainsi une première communication est établie par le chemin S1-S2 entre le terminal IPT1 et le serveur vocal VS.

Le serveur vocal VS répond à l'usager du terminal IPT1, selon le même chemin S1-S2, en lui proposant une liste de divers services administratifs ou commerciaux. L'usager choisit un service dans cette liste, en appuyant sur une ou plusieurs touches du terminal IPT1. Le serveur vocal VS reçoit des signaux audio correspondant aux touches actionnées et en déduit, par exemple, que le terminal IPT1 doit être mis en communication avec le terminal IPT2. Il commande alors le commutateur P1 pour appeler le terminal IPT2 et établir une deuxième communication. En utilisant le protocole de signalisation QSIG, le commutateur P1 commande l'établissement d'un chemin de voix et de signalisation, S3-S4, depuis ce commutateur P1 jusqu'au terminal IPT2. Le protocole QSIG est opérationnel seulement jusqu'à la passerelle GW. Cette commande QSIG établit une première partie S3 du chemin, cette partie S3 s'étendant entre le commutateur P1 et la passerelle GW. La passerelle GW traduit la commande du protocole QSIG vers le protocole SIP. La commande traduite commande le routeur IPR pour créer une session correspondant à une seconde partie, S4, du chemin de voix et de signalisation, cette partie s'étendant depuis la passerelle GW jusqu'au terminal IPT2.

Enfin, le serveur vocal VS commande le commutateur P1 pour joindre la première et la deuxième communication en raccordant les chemins S2 et S3. Le terminal IPT1 communique alors avec le terminal IPT2 via le routeur IPR, le commutateur P2, le commutateur P1, puis de nouveau le commutateur P2, et le routeur IPR.

Ainsi, il apparaît que, lorsqu'un terminal du sous-réseau SIPN bénéficie d'un service offert par un serveur associé à un commutateur du sous-réseau QSIGN, la communication avec ce serveur peut être transférée (dans certains cas) vers un autre terminal du sous-réseau SIPN selon un chemin S1-S2-S3-S4 qui n'est pas optimal puisqu'il comporte un long détour par rapport au chemin le plus court, puisque le chemin S1-S2-S3-S4 sort du sous-réseau SIPN puis re-entre dans ce sous-réseau.

Le but de l'invention est de remédier à cet inconvénient.

EP-A-0876041 décrit un procédé pour optimiser des communications établies dans un réseau homogène en ce qui concerne les protocoles de signalisation. Le document draft-elwell-sipping-qsig&sip-02.txt (IETF - "Interworking between SIP an QSIG") décrit des procédés pour établir une communication entre un premier réseau de télécommunication et un second réseau utilisant respectivement les protocoles QSIG et SIP.

L'objet de l'invention est un procédé pour optimiser des communications établies dans un réseau privé de télécommunication comportant deux sous-réseaux utilisant respectivement les protocoles QSIG et SIP,
lorsqu'un premier terminal appartenant au sous-réseau utilisant le protocole SIP demande l'établissement d'une communication avec un serveur associé à premier commutateur appartenant au sous-réseau utilisant le protocole QSIG, et que cette communication devra être transférée à un second terminal appartenant au sous-réseau utilisant le protocole SIP, ces deux sous-réseaux étant reliés par une passerelle QSIG/SIP associée à un second commutateur du sous-réseau utilisant le protocole QSIG ;
consistant à établir classiquement :
- une première communication entre le premier terminal et le premier commutateur ;
- puis une deuxième communication entre le premier commutateur et le second terminal,
- puis joindre ces deux communications dans le premier commutateur pour faire communiquer le premier et le second terminal via la passerelle, le premier, et le second commutateur ;
**et étant caractérisé** en ce qu'il consiste ensuite à utiliser des fonction classiques des protocoles QSIG et SIP pour :
- établir une troisième communication entre le premier et le second terminal exclusivement à l'intérieur du sous-réseau utilisant le protocole SIP;
- puis relâcher la première communication et la deuxième communication.

Le procédé ainsi caractérisé permet d'obtenir un chemin optimal pour faire communiquer les deux terminaux, parce que le chemin qu'il établit pour la troisième communication ne passe pas par des commutateurs du réseau utilisant le protocole QSIG. Ce procédé permet donc d'économiser des ressources de ce réseau.
L'invention a aussi pour objet un commutateur pour un réseau privé de télécommunication comportant deux sous-réseaux utilisant respectivement les protocoles QSIG et SIP, ce commutateur utilisant le protocole QSIG, **caractérisé** en ce qu'il comporte des moyens logiciels pour utiliser des fonction classiques du protocoles QSIG pour :
lorsqu'un premier terminal appartenant au réseau utilisant le protocole SIP a établi une première communication avec un serveur associé à premier autre commutateur appartenant au sous-réseau utilisant le protocole QSIG, et que cette communication doit être transférée à un second terminal appartenant au réseau utilisant le protocole SIP, ces deux sous-réseaux étant reliés par une passerelle QSIG/SIP associée à un second noeud du sous-réseau utilisant le protocole QSIG,
et que le serveur a établi classiquement une deuxième communication entre le premier commutateur et le second terminal, puis a joint ces deux communications pour faire communiquer les deux terminaux via la passerelle (GW), le premier, et le second commutateur :
   - commander l'établissement d'une troisième communication entre le premier et le second terminal exclusivement à l'intérieur du sous-réseau (SIPN) utilisant le protocole SIP ;
   - puis commander le relâchement de la première et de la seconde communication.

L'invention sera mieux comprise et d'autres caractéristiques apparaîtront à l'aide de la description ci-dessous et des figures l'accompagnant :
- La **figure 1**, décrite ci-dessus, représente un exemple de réseau privé comportant deux sous-réseaux, et illustre le procédé classiquement appliqué lorsqu'un premier terminal appartenant au réseau utilisant le protocole SIP a établi une communication avec un serveur associé à premier commutateur appartenant au sous-réseau utilisant le protocole QSIG, et que cette communication doit être transférée à un second terminal appartenant au réseau utilisant le protocole SIP. D'autre part, elle illustre une première partie de la mise en oeuvre du procédé selon l'invention, cette première partie étant analogue au procédé classique.
- Les **figures 2 à 5** illustrent des opérations réalisées successivement au cours d'une deuxième partie du procédé selon l'invention, cette seconde partie consistant à utiliser des fonction classiques des protocoles QSIG et SIP pour établir une troisième communication entre le premier et le second terminal, exclusivement à l'intérieur du sous-réseau utilisant le protocole SIP ; puis relâcher la première communication et la deuxième communication.

Une première opération illustrée par la **figure 2**, consiste à commander le commutateur P1 (par le serveur vocal VS) pour qu'il émette un message de signalisation QSIG contenant l'indication « CALL TRANSFER COMPLETE (PRIMARY)» à destination de tous les noeuds supportant le chemin S2-S1, et un message de signalisation QSIG contenant l'indication « CALL TRANSFER COMPLETE (SECONDARY) » à destination de tous les noeuds supportant le chemin S3-S4. Ces messages sont des messages classiques du protocole QSIG, et sont au format QSIG jusqu'à ce qu'ils arrivent au commutateur P2 où la passerelle GW les traduit au format SIP avant de les retransmettre au routeur IPR.

Puis une deuxième opération, illustrée par la **figure 3** consiste à émettre, à partir du commutateur associé à la passerelle GW, c'est à dire le commutateur P2, sur le chemin S2, un message de signalisation QSIG contenant l'indication « PATH REPLACE PROPOSE ». Ce message de signalisation est un message classique du protocole QSIG, qui indique aux noeuds qu'il rencontre en chemin, en particulier le commutateur P1, que le commutateur P2 souhaite optimiser le chemin S2-S3.

Ce message est classique, mais il faut prévoir des moyens logiciels (en supplément des moyens logiciels classique d'un commutateur privé compatible QSIG) pour que le commutateur P2 émette ce message lorsqu'il reçoit le message contenant l'indication « CALL TRANSFER COMPLETE (PRIMARY)». Le commutateur qui supporte l'extrémité du chemin S2, c'est à dire P1 dans cet exemple, retransmet ce message sur le chemin S3 puisque les chemins S2 et S3 sont joints dans ce commutateur P1. Ce message revient donc jusqu'au commutateur supportant l'extrémité du chemin S3, c'est à dire le commutateur P2, ce qui a pour effet de lancer une troisième opération.

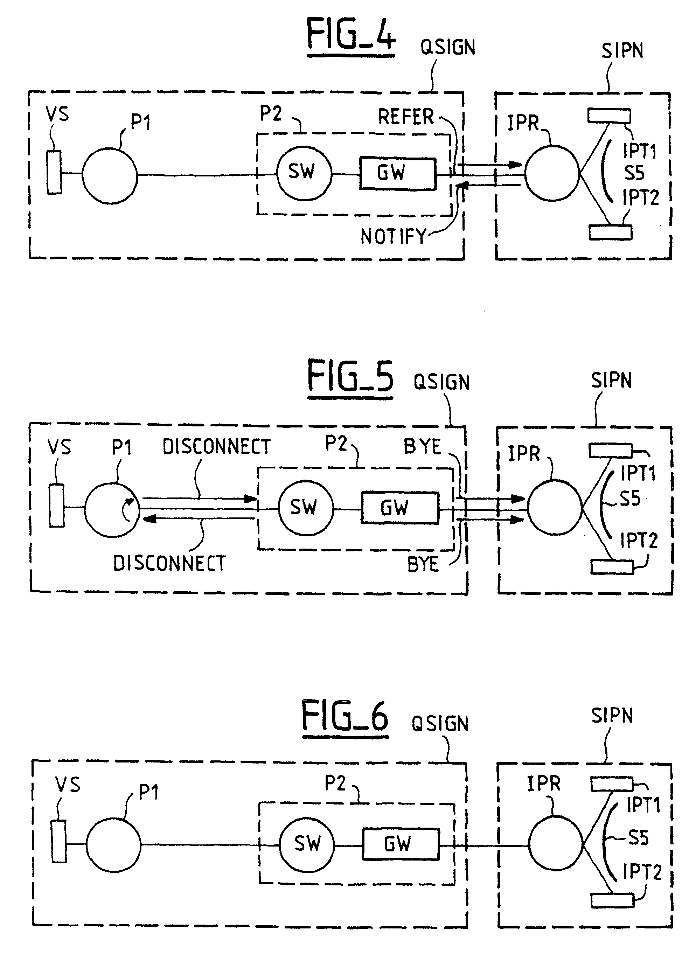

La troisième opération, illustrée par la **figure 4** consiste à émettre, à partir de la passerelle GW du commutateur P2, sur le chemin S1, un message de signalisation SIP appelé «REFER » qui indique au noeud supportant l'autre extrémité du chemin S1, c'est à dire le routeur IPR, que le commutateur P2 souhaite optimiser les chemins S3-S4. Ce message est classique dans le protocole SIP,. Ce message demande une optimisation de chemin, en précisant l'identité IPT1 et IPT2 des terminaux qui doivent être reliés par un chemin optimal. Ce message SIP est classique , mais il faut prévoir des moyens logiciels (en suppléments des moyens logiciels classique d'un commutateur privé compatible QSIG) pour que le commutateur P2 émette ce message lorsqu'il reçoit le message QSIG contenant l'indication « PATH REPLACE PROPOSE » revenant par le chemin S3.

Le routeur IPR répond par un message SIP classique « NOTIFY » signifiant qu'il a fait l'optimisation demandée, c'est à dire établir une troisième communication selon un chemin S5 aussi direct que possible entre les terminaux IPT1 et IPT2. Dans cet exemple simple, le chemin S5 ne traversequ'un routeur, IPR, qui est aussi le routeur servant d'accès au sous-réseau QSIGN. Dans d'autres exemples, le chemin S5 peut devoir passer en outre par d'autres routeurs appartenant au sous-réseau SIPN, mais dans tous les cas le chemin S5 reste exclusivement dans le sous-réseau SIPN.

Une quatrième opération, illustrée par la **figure 5** consiste alors à émettre, à partir du commutateur P2, sur le chemin S3, un message de signalisation QSIG contenant l'indication «DISCONNECT» qui demande aux noeuds supportant ce chemin S3, de relâcher la première et la deuxième communication. Ce message est propagé sur le chemin S3 puis sur le chemin S2 qui est joint au chemin S3. Les chemins S3 et S2, et par conséquent le chemin S1, sont donc libérés. D'autre part, un message SIP appelé « BYE » est émis par le commutateur P2 sur le chemin S4. Ce message demande au routeur IPR de relâcher la première et la deuxième communication, c'est à dire libérer les chemins S1 et S4 en terminant les sessions correspondantes.

Ce message est classique dans le protocole SIP. Il est émis par la passerelle GW du commutateur P2. Il faut prévoir des moyens logiciels (en suppléments des moyens logiciels classiques d'un commutateur privé compatible QSIG muni d'une passerelle QSIG/SIP) pour que le commutateur P2 émette ce message lorsqu'il reçoit le message contenant l'indication « DISCONNECT » revenant par le chemin S2.

La **figure 6** illustre le résultat final de ces opérations : Le routeur IPR a établi une troisième communication en créant une nouvelle session correspondant à un chemin optimisé S5 qui relie les terminaux IPT1 et IPT2 via le routeur IPR, sans aucun détour à travers le sous-réseau QSIGN. Les chemins S1, S2, S3, S4 sont libérés.

## Revendications

1. Procédé pour optimiser des communications établies dans un réseau privé de télécommunication comportant deux sous-réseaux (QSIGN et SIPN) utilisant respectivement les protocoles QSIG et SIP,
lorsqu'un premier terminal (IPT1) appartenant au sous-réseau (SIPN) utilisant le protocole SIP demande l'établissement d'une communication avec un serveur associé à premier commutateur (P1) appartenant au sous-réseau (QSIGN) utilisant le protocole QSIG, et que cette communication devra être transférée à un second terminal (IPT2) appartenant au sous-réseau (SIPN) utilisant le protocole SIP, ces deux sous-réseaux étant reliés par une passerelle QSIG/SIP (GW) associée à un second commutateur (P2) du sous-réseau (QSIGN) utilisant le protocole QSIG ;
consistant à établir classiquement :
- une première communication (S1-S2) entre le premier terminal (IPT1) et le premier commutateur (P1) ;
- puis une deuxième communication (S3-S4) entre le premier commutateur (P1) et le second terminal (IPT2),
- puis joindre ces deux communications (S1-S2, S3-S4) dans le premier commutateur (P1) pour faire communiquer le premier et le second terminal (IPT1, IPT2) via la passerelle (GW), le premier, et le second commutateur (P1, P2) ;
**et étant caractérisé en ce qu'**il consiste ensuite à utiliser des fonction classiques des protocoles QSIG et SIP pour :
- établir une troisième communication (S5) entre le premier et le second terminal (IPT1, IPT2) exclusivement à l'intérieur du sous-réseau (SIPN) utilisant le protocole SIP ;
- puis relâcher la première communication (S1-S2) et la deuxième communication (S3-S4).

2. Commutateur (P2) pour un réseau privé de télécommunication comportant deux sous-réseaux (QSIGN et SIPN) utilisant respectivement les protocoles QSIG et SIP, ce commutateur utilisant le protocole QSIG, **caractérisé en ce qu'**il comporte des moyens logiciels pour utiliser des fonction classiques du protocoles QSIG pour :
lorsqu'un premier terminal (IPT1) appartenant au réseau (SIPN) utilisant le protocole SIP a établi une première communication (S1-S2) avec un serveur (VS) associé à premier autre commutateur (P1) appartenant au sous-réseau (QSIGN) utilisant le protocole QSIG, et que cette communication doit être transférée à un second terminal (IPT2) appartenant au réseau utilisant le protocole SIP, ces deux sous-réseaux étant reliés par une passerelle QSIG/SIP (GW) associée à un second noeud du sous-réseau (QSIGN) utilisant le protocole QSIG,
et que le serveur (VS) a établi classiquement une deuxième communication (S3-S4) entre le premier commutateur (P1) et le second terminal (IPT2), puis a joint ces deux communications pour faire communiquer les deux terminaux via la passerelle (GW), le premier, et le second commutateur (P1, P2) :
- commander l'établissement d'une troisième communication (S5) entre le premier et le second terminal (IPT1, IPT2) exclusivement à l'intérieur du sous-réseau (SIPN) utilisant le protocole SIP ;
- puis commander le relâchement de la première et de la seconde communication (S1-S2, S3-S4).

## Patentansprüche

1. Verfahren zur Optimierung einer bestehenden Übertragung in einem Privatnetzwerk über zwei Sub-Netzwerke (QSIGN und SIPN) mit QSIG- und SIP-Protokoll,
wenn ein erstes, zu dem Sub-Netzwerk (SIPN) mit SIP-Protokoll gehörendes Endgerät (IPT1) den Aufbau einer Verbindung zu einem Server anfordert, der einer ersten, zu dem Sub-Netzwerk (QSIGN) mit QSIG-Protokoll gehörenden Vermittlungseinrichtung (P1) zugeordnet ist, und wenn diese Verbindung zu einem zweiten Endgerät (IPT2) weitergeleitet werden muss, welches zu dem Sub-Netzwerk (SIPN) mit SIP-Protokoll gehört, wobei diese beiden Sub-Netzwerke über einen QSIG/SIP-Gateway (GW) verbunden sind, der einer zweiten Vermittlungseinrichtung (P2) des Sub-Netzwerks (QSIGN) mit QSIG-Protokoll zugeordnet ist;
klassischerweise bestehend im Aufbau:
- einer ersten Verbindung (S1-S2) zwischen dem ersten Endgerät (IPT1) und der ersten Vermittlungseinrichtung (P1);
- danach einer zweiten Verbindung (S3-S4) zwischen der ersten Vermittlungseinrichtung (P1) und dem zweiten Endgerät (IPT2);
- und anschließend im Zusammenführen dieser beiden Verbindungen (S1-S2, S3-S4) in der ersten Vermittlungseinrichtung (P1), um eine Verbindung zwischen dem ersten und dem zweiten Endgerät (IPT1, IPT2) über den Gateway (GW), die erste und die zweite Vermittlungseinrichtung (P1, P2) herzustellen;
und **dadurch gekennzeichnet, dass** es anschließend darin besteht, klassische Funktionen der QSIG- und SIP-Protokolle zu nutzen, um:
- eine dritte Verbindung (S5) zwischen dem ersten und dem zweiten Endgerät (IPT1, IPT2) ausschließlich innerhalb des Sub-Netzwerks (SIPN) mit SIP-Protokoll aufzubauen;
- danach die erste Verbindung (S1-S2) und die zweite Verbindung (S3-S4) abzubauen.

2. Vermittlungseinrichtung (P2) für ein Privatnetzwerk, welches zwei Sub-Netzwerke (QSIGN und SIPN) mit QSIG- bzw. SIP-Protokoll umfasst, wobei diese Vermittlungseinrichtung das QSIG-Protokoll nutzt, **dadurch gekennzeichnet, dass** sie Software-Mittel zur Nutzung der klassischen Funktionen des QSIG-Protokolls umfasst, um:
dann, wenn ein erstes, zu dem Netzwerk (SIPN) mit SIP-Protokoll gehörendes Endgerät (IPT1) eine erste Verbindung (S1-S2) zu einem Server (VS) aufgebaut hat, der einer ersten anderen, zu dem Sub-Netzwerk (QSIGN) mit QSIG-Protokoll gehörenden Vermittlungseinrichtung (P1) zugeordnet ist, und wenn diese Verbindung zu einem zweiten Endgerät (IPT2) weitergeleitet werden muss, welches zu dem [Sub-] Netzwerk mit SIP-Protokoll gehört, wobei diese beiden Sub-Netzwerke über einen QSIG/SIP-Gateway (GW) verbunden sind, der einem zweiten Knoten des Sub-Netzwerks (QSIGN) mit QSIG-Protokoll zugeordnet ist;
und wenn der Server (VS) klassischerweise eine zweite Verbindung (S3-S4) zwischen der ersten Vermittlungseinrichtung (P1) und dem zweiten Endgerät (IPT2) aufgebaut hat und anschließend diese beiden Verbindungen zusammengeführt hat, um eine Verbindung zwischen den beiden Endgeräten über den Gateway (GW), die erste und die zweite Vermittlungseinrichtung (P1, P2) herzustellen:
- den Aufbau einer dritten Verbindung (S5) zwischen dem ersten und dem zweiten Endgerät (IPT1, IPT2) ausschließlich innerhalb des Sub-Netzwerks (SIPN) mit SIP-Protokoll zu steuern;
- danach den Abbau der ersten und der zweiten Verbindung (S1-S2, S3-S4) zu steuern.

## Claims

1. A method of optimising calls set up in a private telecommunication network including two subnetworks (QSIGN and SIPN) using the QSIG and SIP protocols, respectively,
when a first terminal (IPT1) belonging to the subnetwork (SIPN) using the SIP requests the setting up of a call with a server associated with a first switch (P1) belonging to the subnetwork (QSIGN) using the QSIG protocol and said call must be transferred to a second terminal (IPT2) belonging to the subnetwork (SIPN) using the SIP, the two subnetworks being connected by a QSIG/SIP gateway (GW) associated with a second switch (P2) of the subnetwork (QSIGN) using the QSIG protocol;
consisting in conventionally establishing:
- a first call (S1-S2) between the first terminal (IPT1) and the first switch (P1);
- then a second call (S3-S4) between the first switch (P1) and the second terminal (IPT2),
- then joining the two calls (S1-S2, S3-S4) in the first switch (P1) so that the first and second terminals (IPT1, IPT2) communicate via the gateway (GW), the first switch, and the second switch (P1, P2);
and then being **characterised in that** it consists of using conventional functions of the QSIG protocol and the SIP to:
- set up a third call (S5) between the first terminal and the second terminal (IPT1, IPT2) exclusively within the subnetwork (SIPN) using the SIP;
- then to clear down the first call (S1-S2) and the second call (S3-S4).

2. A switch (P2) using the QSIG protocol for a private telecommunication network including two subnetworks (QSIGN and SIPN) using the QSIG protocol and SIP, respectively, **characterised in that** it includes software means for using classic functions of the QSIG protocol as follows:
when a first terminal (IPT1) belonging to the subnetwork (SIPN) using the SIP has set up a first call (S1-S2) with a server (VS) associated with another first switch (P1) belonging to the subnetwork (QSIGN) using the QSIG protocol and said call must be transferred to a second terminal (IPT2) belonging to the network using the SIP, the two subnetworks being connected by a QSIG/SIP gateway (GW) associated with a second node of the subnetwork (QSIGN) using the QSIG protocol,
and when the server (VS) has conventionally established a second call (S3-S4) between the first switch (P1) and the second terminal (IPT2) and has then joined the two calls so that both terminals communicate via the gateway (GW), the first switch and the second switch (P1, P2):
- command the setting up of a third call (S5) between the first terminal and the second terminal (IPT1, IPT2) exclusively within the subnetwork (SIPN) using the SIP;
- then command clearing down the first call and the second call (S1-S2, S3-S4).
